# FASCICULE DE BREVET EUROPEEN

(11) **EP 1 385 726 B1**
(45) Date de publication et mention de la délivrance du brevet: **04.10.2006**
(21) Numéro de dépôt: 02735493.5
(22) Date de dépôt: 23.04.2002
(51) Int. Cl.: B60T 13/57, B60T 17/00

(54) **SERVOMOTEUR PNEUMATIQUE D'ASSISTANCE DE FREINAGE AVEC DYNAMIQUE D'ASSISTANCE AMELIOREE**
PNEUMATISCHE BREMSKRAFTVERSTÄRKEREINHEIT MIT DYNAMISCHER HILFE
PNEUMATIC BRAKE SERVO-UNIT WITH IMPROVED DYNAMIC ASSISTANCE

(30) Priorité: 26.04.2001 FR 0105779
(43) Date de publication de la demande: 04.02.2004
(73) Titulaire: ROBERT BOSCH GMBH, 70442 Stuttgart (DE)
(72) Inventeur: RICHARD, Philippe, F-77500 Chelles (FR)
(74) Mandataire: Hurwic, Aleksander Wiktor
(86) Numéro de dépôt international: PCT/FR2002/001395
(87) Numéro de publication internationale: WO 2002/087944

(56) Documents cités:
- DE-A- 19 548 705
- US-A- 3 037 487
- US-A- 3 109 287
- US-A- 5 520 086
- US-A- 5 711 202
- PATENT ABSTRACTS OF JAPAN vol. 1998, no. 08, 30 juin 1998 (1998-06-30) & JP 10 067318 A (AISIN SEIKI CO LTD), 10 mars 1998 (1998-03-10)

## Description

La présente invention a pour objet un servomoteur pneumatique d'assistance de freinage avec dynamique d'assistance améliorée. L'invention a notamment pour but de fournir une assistance plus souple correspondant à toutes les situations de freinage. Elle concerne les servomoteurs pneumatiques d'assistance de freinage dont l'utilisation d'assistance doit aussi bien se produire en cas de freinage faible qu'en cas de freinage fort.

Un servomoteur pneumatique d'assistance de freinage comporte dans son principe une chambre avant à volume variable séparée d'une chambre arrière également à volume variable par une cloison formée par une membrane étanche et souple et par une plaque-jupe rigide. La plaque-jupe rigide entraîne un piston pneumatique prenant appui, par l'intermédiaire d'une tige de poussée, sur un piston primaire d'un maître cylindre d'un circuit hydraulique de freinage, typiquement un maître cylindre tandem. La chambre avant, placée du côté du maître cylindre, est reliée pneumatiquement à une source de vide. La chambre arrière, opposée à la chambre avant et placée du côté d'une pédale de frein, est reliée pneumatiquement, de manière contrôlée par une valve, à une source de fluide propulseur, typiquement de l'air sous pression atmosphérique. Au repos, c'est à dire lorsqu'un conducteur n'appuie pas sur une pédale de frein, les chambres avant et arrière sont connectées entre elles par un premier clapet alors que la chambre arrière est isolée par rapport à la pression atmosphérique par un deuxième clapet. Lors du freinage, on isole tout d'abord la chambre avant par rapport à la chambre arrière en fermant le premier clapet, puis on admet de l'air dans la chambre arrière en ouvrant le deuxième clapet. Cette admission d'air a pour effet de propulser la cloison et de mettre en oeuvre l'assistance de freinage pneumatique:

US-A-4 005638 - décrit un servomoteur d'assistance de freinage comportant un clapet unique. Avec un servomoteur d'assistance de freinage, il est nécessaire de pouvoir satisfaire à des exigences diverses. Notamment, il est connu par divers artifices de provoquer une application brutale de l'effort d'assistance en cas de freinage d'urgence. Notamment il est également prévu dans de tels cas, que l'assistance soit maintenue malgré un éventuel retrait de l'action du pied de l'utilisateur sur une pédale de frein. En outre, dans un autre domaine, un dispositif d'assistance de freinage doit également servir lors de freinages légers, lorsque le conducteur d'un véhicule cherche seulement à ralentir son véhicule très faiblement. Autant, dans le cas de freinage d'urgence, il importe d'autoriser un-accès à grand débit du fluide haute pression dans la chambre arrière, autant pour le freinage léger, il importe que le débit dans la chambre arrière soit réduit afin d'organiser une certaine progressivité de l'assistance

On observe alors dans ce dernier mode d'utilisation différents phénomènes. Soit, parce qu'un compromis entre admission faible d'air dans la chambre arrière et admission forte d'air dans la chambre arrière ne peut pas être trouvé, on peut accepter que l'assistance ne soit pas appliquée pour les freinages légers. En définitive dans ce cas, tous les jeux du système de freinage jouent dans le sens de la neutralisation de l'assistance pour les freinages légers. Cependant, une telle pratique n'est pas confortable pour le conducteur. Autrement, si on organise un faible passage d'air haute pression lors de freinages légers on observe deux problèmes.

Un premier problème résulte d'un bruit de sifflement, dit wiper noise (bruit d'essuie-glace en anglais), du fait que l'ajutage de passage d'air a de faibles dimensions et que, dans ces conditions, le débit d'air dans la chambre arrière se fait à grande vitesse de l'air introduit, ce qui provoque des turbulences et donc la création d'un bruit acoustique. Autrement, si l'air n'est pas suffisamment freiné (en particulier par des turbulences), il arrive que l'assistance de freinage anticipe le freinage léger imposé par le conducteur. Dans ce cas, tout se passe comme si l'assistance de freinage revenait à exercer spontanément un effort sur l'ensemble de la tige de poussée et à rattraper de son seul fait la course morte qui existe à l'endroit du maître cylindre hydraulique: Si on n'y prend garde, une telle arrivée d'air trop importante dans la chambre arrière provoque alors un à coup de freinage et, du fait de l'avancée trop rapide de la tige de poussée, une fermeture du clapet d'admission d'air dans la chambre arrière. De ce fait le système en entier se met à osciller entre des états pour lequel l'air appuie sur la plaque-jupe rigide, ou n'appuie plus sur cette dernière. Le phénomène ressenti est alors celui d'une vibration d'application du freinage, parfaitement incommode pour la conduite, notamment lorsque pour des raisons de manoeuvre celle ci doit s'effectuer avec précision et douceur.

Un autre problème vient compliquer la réalisation d'un tel dispositif d'assistance pneumatique de freinage. Ce problème est celui de l'industrialisation. En effet, sur le plan industriel, lorsqu'on change une pièce d'un dispositif, il convient d'en changer le moins possible les contraintes d'utilisation de manière à faciliter sa mise en oeuvre dans les véhicules. En effet, les dimensions hors tout du dispositif d'assistance de freinage font l'objet d'accord entre les constructeurs des véhicules automobiles et les fournisseurs d'accessoires. Ici, pour pouvoir être monté dans un véhicule, un dispositif d'assistance pneumatique de freinage doit donc comporter un encombrement imposé à l'avance, et cet encombrement ne peut pas être modifié. En définitive, la solution au problème cité ci-dessus doit en plus satisfaire à des exigences de taille. Une contrainte d'interchangeabilité doit donc être respectée pour toutes améliorations apportées à un tel dispositif.

Dans l'invention, on a pu résoudre ces problèmes en réalisant dans le servomoteur une vanne trois voies qui sert à relier sélectivement la chambre arrière à la chambre avant, ou à une arrivée haute pression, sous la forme d'un distributeur plongeur monobloc. Ce distributeur plongeur monobloc présente deux particularités. Une première particularité de l'invention se situe alors dans la réalisation d'un extrados, d'un clapet de la vanne, de profil particulièrement calibré, permettant une maîtrise étendue des flux entrants faibles d'air ambiant dans la chambre arrière, en particulier lors du début de l'assistance. On pourra montrer que la courbure de cet extrados est telle qu'elle favorise un flux laminaire, même faible et même à haute différence de pression, entre la chambre arrière et l'espace où l'air est à la pression atmosphérique.

Toutefois, la réalisation de cet extrados nécessite en quelque sorte que l'air soit conduit sur une distance significative En pratique, l'air est admis axialement dans le dispositif d'assistance pneumatique de freinage, en particulier le long d'une tige de commande. Comme par ailleurs la dimension hors tout du diamètre du mécanisme de ce dispositif d'assistance de freinage, à cet endroit, est limitée (pour les raisons d'industrialisation citées ci-dessus), l'extension de l'extrados en direction radiale divergente occupe une part significative de l'espace disponible entre la paroi externe du dispositif et cette tige de commande.

Pour pouvoir alors réaliser le deuxième clapet de la vanne trois voies, celui qui permet la remise au vide de la chambre arrière lorsque la pédale de frein n'est plus sollicitée, on prévoit que ce deuxième clapet soit situé, non pas dans un même plan horizontal que celui du clapet qui permet l'arrivée de l'air à pression atmosphérique, mais dans un plan situé à une altitude différente le long de la tige de commande. On montrera qu'en agissant ainsi on bénéficie pour ces deux clapets de tout l'écart radial possible entre, d'une part, la paroi externe du dispositif et d'autre part la tige de commande elle-même.

De préférence d'ailleurs la chambre arrière communique, en face de ce plongeur monobloc, en regard d'un redan réalisé dans le plongeur de façon à ce que le premier clapet et le deuxième clapet puissent tous deux avoir un débit maximal, et soient donc situés tous deux (malgré la présence de l'extrados) le plus proche possible de la paroi externe du dispositif. On montrera ainsi qu'on résout tout les problèmes cités : une faible admission d'air contrôlée, et donc la présence d'une assistance de freinage pour tous les freinages faibles, une grande admission d'air lorsqu'une sollicitation importante est en cause, une absence de sifflement lors des freinages faibles, et le respect de contraintes d'industrialisation.

L'invention a donc pour objet un servomoteur pneumatique d'assistance de freinage comportant
- une tige de commande,
- une chambre avant soumise à une dépression,
- une chambre arrière, et
- une vanne manoeuvrée par la tige de commande,
- la vanne comportant trois voies et servant à relier sélectivement la chambre arrière à la chambre avant ou à une arrivée haute pression,
- la vanne trois voies comportant un distributeur plongeur monobloc emmené par la tige de commande et formant deux clapets situés dans deux plans perpendiculaires à un axe de la tige, ces deux plans étant distincts l'un de l'autre,
- un premier clapet de la vanne trois voies comportant un premier siège rigide de clapet et un premier joint souple de clapet, et reliant la chambre avant à la chambre arrière,
- un deuxième clapet de la vanne trois voies comportant un deuxième siège rigide de clapet et un deuxième joint souple de clapet, et reliant la chambre arrière à l'arrivée haute pression,
- le distributeur plongeur porte le premier joint souple du premier clapet et le deuxième siège rigide du deuxième clapet caractérisé en ce que le premier et le deuxième joints de clapet sont formés par deux éléments indépendants et en ce qu'ils comportent une butée d'arrêt pour le deuxième joint de clapet.

L'invention sera mieux comprise à la lecture de la description qui suit et à l'examen des figures qui l'accompagnent. Celles-ci ne sont présentées qu'à titre indicatif et nullement limitatif de l'invention. Les figures montrent :
- Figure 1: une représentation schématique d'un dispositif d'assistance pneumatique de freinage selon l'invention ;
- Figures 2 et 3 : des représentations du dispositif de la figure 1 dans une position de repos et dans une position de service respectivement ;
- Figures 4a et 4b : des représentations schématiques d'exemples de réalisation d'un plongeur distributeur monobloc selon l'invention avec ses clapets ;
- Figures 5a à 5c : des représentations en coupe et en vue de dessus d'un mode préféré de réalisation d'un plongeur distributeur selon l'invention.

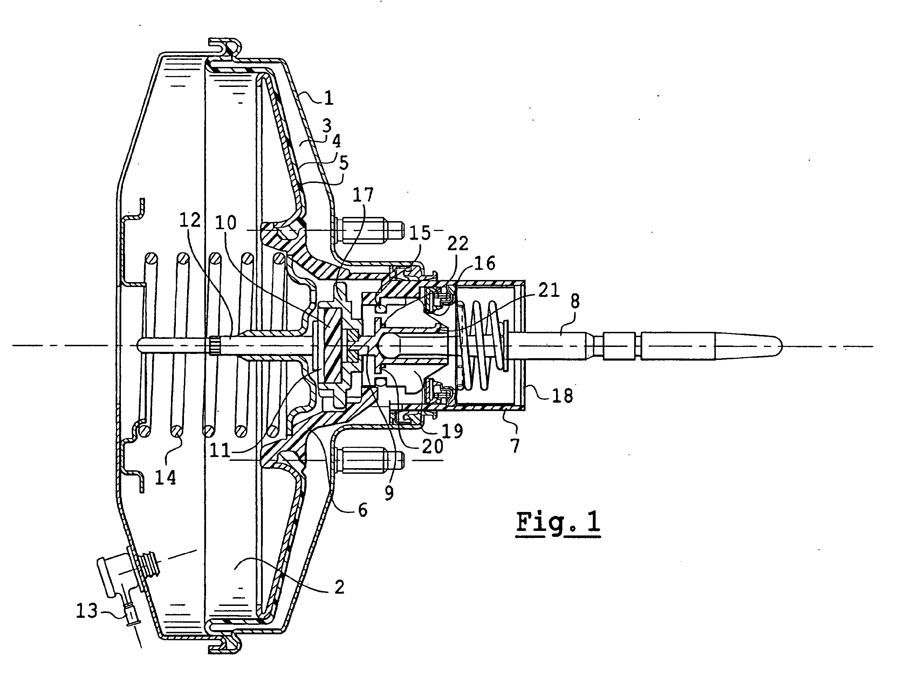

La figure 1 montre un dispositif d'assistance pneumatique de freinage conforme à l'invention. Ce dispositif comporte dans une enceinte 1 une chambre avant 2 et une chambre arrière 3. La chambre avant 2 et la chambre arrière 3 sont séparées par une plaque jupe rigide 4 recouverte d'une membrane étanche 5. La plaque 4 est maintenue solidaire d'un piston pneumatique 6 dont une partie émergente 7 forme un corps externe de piston pneumatique. Le dispositif d'assistance comporte également une tige de commande 8 reliée par des moyens non représentés à un dispositif d'actionnement, notamment une pédale de frein d'un véhicule. La tige de commande 8 est en réaction contre un palpeur 9. Le palpeur 9 est destiné à venir s'appuyer contre un disque de réaction 10, lui-même en appui sur un chapiteau 11 surmontant une tige de poussée 12. La tige de poussée 12, de manière non représentée, sort de l'enceinte 1 et vient actionner un circuit hydraulique de freinage, notamment un maître cylindre d'un tel circuit hydraulique. Le circuit hydraulique de freinage est en relation par ailleurs avec les organes de freinage du véhicule.

La chambre avant 2 est reliée par l'intermédiaire d'une prise 13 avec une pompe à vide, par exemple le circuit d'admission des gaz d'un moteur à explosion, ou une pompe à vide autrement.

Le fonctionnement d'un tel dispositif d'assistance consiste d'abord à faire le vide dans la chambre avant 2 ainsi que dans la chambre arrière 3. Dans ce but ces deux chambres sont reliées contre elles par un clapet, en position ouverte lorsque le dispositif d'assistance est au repos, lorsqu'on ne freine pas. Un ressort de renvoi 14 permet dans cette situation, bien que les deux chambres soient à une même pression très faible de repousser la jupe 4 et le piston 6 en direction de la tige 8. Au moment où on sollicite la tige de commande 8, celle-ci permet d'abord de fermer un premier clapet 15, puis d'ouvrir un second clapet 16 par lequel la chambre arrière 3 est mise en communication avec l'air ambiant, à pression atmosphérique. Dans ces conditions, l'air s'engouffre dans la chambre arrière 3 et exerce une pression sur la jupe 4 entraînant avec lui le piston pneumatique 6. Le piston pneumatique 6 comporte un moyen d'appui pour appuyer sur une capsule 17 qui enveloppe le disque 10. La capsule 17 laisse passer en son centre le palpeur 9. Le disque 10 est ainsi confiné dans un espace compris entre le chapiteau 11, la capsule 17 et le palpeur 9. Le disque 10 est en un matériau souple. Par les compressions auxquelles il est soumis, il règle les positions respectives de la capsule 17 (et donc du piston pneumatique 6) et du palpeur 9. En définitive, par ces différentes compressions il règle les positions en ouverture du premier et deuxième clapet 15 et 16, entraînant l'arrivée de l'air à pression atmosphérique dans la chambre arrière, ou au contraire son blocage. Les deux clapets 15 et 16 forment en fait ensemble une vanne trois voies permettant de relier sélectivement la chambre arrière 3 à la chambre avant 2 d'une part, ou à une arrivée haute pression 18 représentée par une entrée du corps 7 du piston pneumatique 6.

Selon l'invention, cette vanne trois voies comporte essentiellement un distributeur plongeur 19. Ce distributeur plongeur 19 est une pièce monobloc qui est emmenée par la tige de commande 8. Dans ce but, le distributeur 19 est serti ici autour du palpeur 9. Par exemple, le distributeur 19 a globalement la forme d'un manchon épais dans lequel se place, au centre exactement, le palpeur 9. Une butée 20 et un bout replié 21 permettent de maintenir à chaque extrémité le distributeur 19 en position autour du palpeur 9. Un joint 22 assure l'étanchéité de ce sertissage et empêche une fuite d'air par l'interstice qui peut subsister entre le palpeur 9 et le plongeur 19.

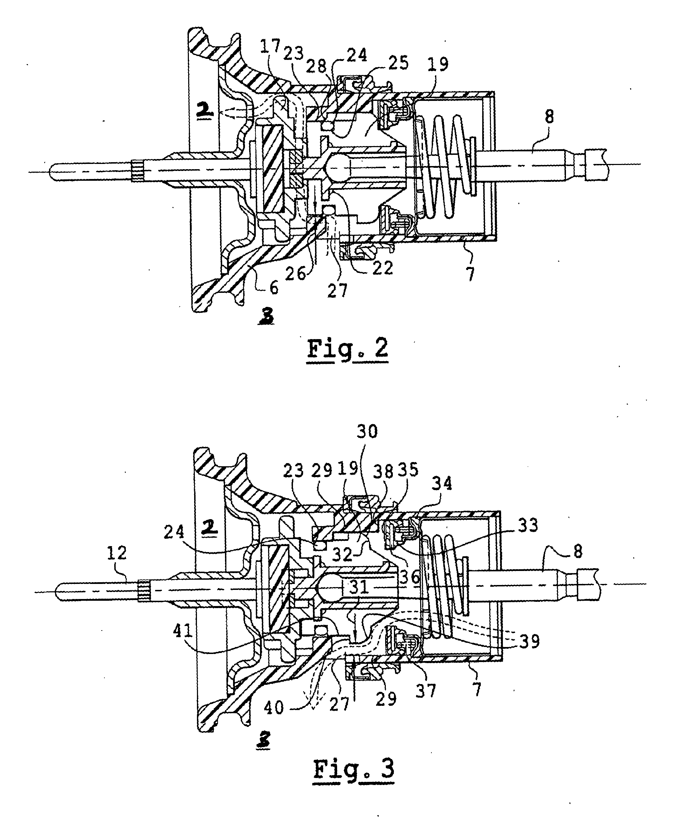

Les figures 2 et 3 qui sont des agrandissements de la figure 1 correspondent respectivement à une position au repos et à une position d'assistance du dispositif d'assistance pneumatique de l'invention. Elles permettent de mieux expliquer la structure de la vanne trois voies. Sur la figure 2, en position de repos, la tige de commande 8 et donc le plongeur 19 sont en position retirée par rapport à la coupelle 17. Le corps 7 du piston pneumatique possède, à un endroit en regard du.plongeur 19, un premier alésage 23. Ce premier alésage 23 forme le siège du premier clapet 15. Le joint de ce premier clapet 15 est réalisé, dans cet exemple, sous la forme d'un joint torique 24 engagé dans une rainure circulaire 25 du distributeur 19. Le distributeur 19, pour la partie qui correspond à l'engagement dans l'alésage 23, possède en fait deux diamètres, Il possède un premier diamètre principal, significativement plus faible que le diamètre de l'alésage 23 et permettant ainsi de ménager un espace 26 entre cet alésage et le plongeur 19. En partie inférieure, le piston 6 débouche dans la chambre avant 2 alors que par une ouïe 27 située en position intermédiaire, le piston 6 débouche dans la chambre arrière 3. Avec l'écart 26, pour une position retirée de la tige 8, le clapet 15 ouvert organise ainsi la communication de la chambre avant 2 et de la chambre arrière 3. Dans ces conditions, le vide installé dans la chambre avant 2 se communique à la chambre arrière 3 permettant le recul du piston pneumatique 6 sous le fait du ressort 14. La flèche en tirets montre, pour ce dispositif de révolution, le cheminement d'aspiration de l'air entre la chambre arrière 3 et la chambre avant 2.

Un deuxième diamètre du distributeur 19, également à l'endroit de l'alésage 23, est formé par des excroissances permettant au plongeur 19 de coulisser exactement dans l'alésage 23, avec un jeu minimal, par exemple quelques centièmes de millimètres. Ces excroissances ont des déploiements circonférenciels limités. Dans la pratique il y a trois excroissances en forme de dent disposées à 120° sur le pourtour du plongeur 19. Celui-ci est donc maintenu en position sans vibrer dans l'alésage 23 tout en laissant passer, entre les excroissances, l'air pour qu'il soit aspiré par la chambre avant 2.

L'extrémité de l'alésage 23, en direction de la tige de commande 8, est munie d'un chanfrein 28. Le joint torique 24 possède un diamètre de section légèrement plus grand que la profondeur de la rainure 25 qui le reçoit. II déborde donc de cette rainure. Cependant cette rainure 25 possède une hauteur (mesurée selon le sens de la tige de commande 8) légèrement plus grande que ce diamètre de section. Aussi, lorsque la tige de commande 8 est poussée en direction de la chambre avant 2, le joint torique 24 vient-il s'appuyer contre le chanfrein 28, se déformer, et remplir la rainure 25 en exerçant par ailleurs un appui ferme et étanche contre l'alésage 23.

Pour clarifier les explications, pour les clapets on appellera siège du clapet une partie rigide du clapet en principe métallique, et joint de clapet une partie souple permettant, en venant au contact du siège, d'organiser l'étanchéité du clapet. Dans le cas présent, le joint du premier clapet 15 est donc monté sur le distributeur 19, alors que le siège du premier clapet 15 formé par l'alésage 23 est monté sur le corps du piston pneumatique 7.

La figure 3 tout en reprenant les mêmes éléments montre, pour une position enfoncée de la tige de commande 8, l'engagement du joint torique 24 dans l'alésage 23. Pour aider au guidage du plongeur 19, le corps 7 du piston pneumatique possède, de l'autre côté de l'alésage 23 par rapport à la position du joint 24, un autre alésage 29, de diamètre de même ordre que celui de l'alésage 23. Cet alésage 29 comporte des excroissances radiales convergentes. Ces excroissances radiales guident un montant 30, globalement en bec d'aigle du plongeur 19. En fait, de la même façon qu'à la base du plongeur 19 celui ci comporte des excroissances, à l'endroit du bec d'aigle 30, le corps 7 de piston possède deux diamètres. Un premier diamètre principal plus grand permet de réaliser un espace 31 d'écoulement d'air entre son alésage 29 et le corps du plongeur 19.

A l'endroit des excroissances, de préférence elles-mêmes situées dans l'alignement des excroissances de la partie inférieure du plongeur 19, ce corps 7 possède un deuxième diamètre correspondant à la circonférence passant par les têtes des dents et celles-ci portent directement sur le montant 30, avec un jeu très faible permettant un coulissement précis (par exemple quelques centièmes de millimètres).

Le montant en bec d'aigle 30 du plongeur 19 est tourné depuis le centre du manchon épais formant le plongeur 19 vers l'extérieur de ce manchon. Ce bec d'aigle 30 possède une crête circulaire 32 servant de siège au deuxième clapet 16. Ce deuxième clapet comporte par ailleurs comme joint de clapet une membrane cylindrique et souple 33. La membrane cylindrique 34 comporte à sa partie supérieure un bourrelet 34 serti dans le corps de piston 7. A sa partie inférieure, elle comporte un plateau 35 destiné à venir au contact du siège 32. Le plateau 35, réalisé en une matière souple, est maintenu autour d'une rondelle 36, par exemple en métal. Le plateau 35 forme le joint proprement dit du clapet 16. Le plateau 35 est repoussé en direction du siège 32 par un ressort 37 en appui entre le sertissage du bourrelet 34 et le dos de ce plateau 35. Lorsque la tige de commande 8 est retirée, le ressort 37 est comprimé (figure 2). Lorsque la tige de commande 8 est manoeuvrée en direction de la tige de poussée 12, le ressort 37 s'étend jusqu'à ce que le joint 35, qui au départ est en appui contre la crête 32, vienne par ailleurs porter sur un rebord 38 réalisé dans les excroissances de l'alésage 29. Pour le deuxième clapet 16, le siège rigide 32 est donc porté par le plongeur 19, alors que le joint souple 35 est porté par le corps 7.

De préférence, à l'endroit du bec d'aigle 30, le profil du plongeur 19 est le même sur toute sa circonférence. En effet, ce profil en bec d'aigle est de nature à favoriser un écoulement laminaire, sans turbulence de l'air. Il est de nature à réduire la création de bruit d'écoulement, notamment à faible débit au moment de l'ouverture. Pour ne pas créer de turbulences et de vibrations, on maintient à cet endroit le plongeur 19 dans le corps de piston par les excroissances formées dans l'alésage interne 29 de ce corps 7 de piston. Ces excroissances servent par ailleurs à former les butées 38 contre lesquelles vient s'arrêter le joint 35 du deuxième clapet 16.

Le bec d'aigle 30 forme un extrados 39 dont le profil est particulièrement optimisé pour convenir tarit à des usages de freinage léger que de freinage fort. On constate ici que, pour que cet extrados 39 puisse avoir une forme adéquate, il importe de disposer de plus d'espace possible pour que son développement autorise des rayons de courbures faibles (favorable à des bons écoulements) ou plus régulièrement évolutifs.

Comme par ailleurs, du fait de l'interchangeabilité nécessaire, le corps du piston 7 doit posséder des mêmes encombrements extérieurs que ceux des dispositifs précédents (pour pouvoir être monté mécaniquement à la place des anciens corps de piston), on se rend compte que, selon l'invention, ce gain de place est obtenu en plaçant le premier clapet 15 dans un plan perpendiculaire à la tige de commande 8, mais à une altitude différente de celle où se trouve le deuxième clapet 16. Ainsi, en pratique dans le plongeur 19, il y a une différence d'altitude de l'ordre de plusieurs millimètres entre la position de la rainure 23 et la position du siège 32 du deuxième clapet.

Lorsque la tige de commande est ainsi avancée, l'air à pression atmosphérique peut s'engouffrer à l'intérieur du corps 7 du piston et ce, le long de l'extrados 39, dans l'espace 31. L'air peut entrer par l'ouïe 27 dans la chambre arrière 3. Le siège 32 est ainsi situé à l'intérieur de l'extrados 39 du plongeur monobloc 19. En position ouverte du deuxième clapet 16, l'extrados 39 vient se placer au regard d'un épanouissement, l'alésage 29, du corps du piston 7. Ceci permet à pleine ouverture d'autoriser un remplissage très rapide de la chambre arrière 3 avec l'air à pression atmosphérique. Ce faisant, l'admission du fluide haute pression dans la chambre arrière 3 se réalise d'une section de siège, celle du siège 32, à une section annulaire, celle de cet épanouissement. La section annulaire possède un diamètre plus grand que la section de siège. Autrement dit l'injection de l'air est du type radial divergent ce qui est favorable à une admission brutale d'une grande quantité d'air en cas de besoin.

Pour des même raisons, voir figure 2, afin qu'un rétablissement du vide dans la chambre arrière 3 au moment de la fermeture du deuxième clapet 16 soit obtenu le plus rapidement possible, on a intérêt à ce que le diamètre de l'alésage 23 soit le plus grand possible. Cependant, l'alésage 23 doit être contenu dans les dimensions hors tout imposées par les précédentes fabrications de dispositif d'assistance pneumatique. En conséquence dans l'invention, on prévoit que le dispositif plongeur 19 possède un redan 40 de façon à ce que la face 41 circulaire du plongeur 19 dans laquelle est réalisée la rainure 23 se situe en retrait par rapport au diamètre extérieur, le plus grand, du bec d'aigle 30. Ce faisant, on s'assure que le débit d'air en admission et en rétablissement du vide sont tous deux au maximum. En effet, sans le redan 40, l'alésage 23 imposerait que le diamètre le plus grand du bec d'aigle 30 soit dans le prolongement de la face 41, et donc en définitive que le siège 32 du deuxième clapet 16 soit situé plus près de l'axe de révolution du système. Une telle solution conduirait du fait du rétrécissement de la circonférence à avoir des débits plus faibles.

Dans l'exemple montré jusqu'ici, il y a une chambre avant 2 et une chambre arrière 3. Cependant il est tout à fait possible de prévoir un couple de chambres avants et de chambres arrières, mécaniquement en cascade l'une de l'autre, voire en parallèle, avec un dispositif de reprise mécanique du mouvement de la tige de commande 8 d'une part, et du mouvement de la tige de poussée 12 d'autre part. De même, on a montré un dispositif dans lequel la chambre arrière 3 est située en position intermédiaire entre la chambre avant 2 et le plongeur 19. Toutefois, il serait également possible de prévoir un dispositif dans lequel la chambre avant 2 serait située en position intermédiaire entre la chambre arrière 3 et le plongeur 19.

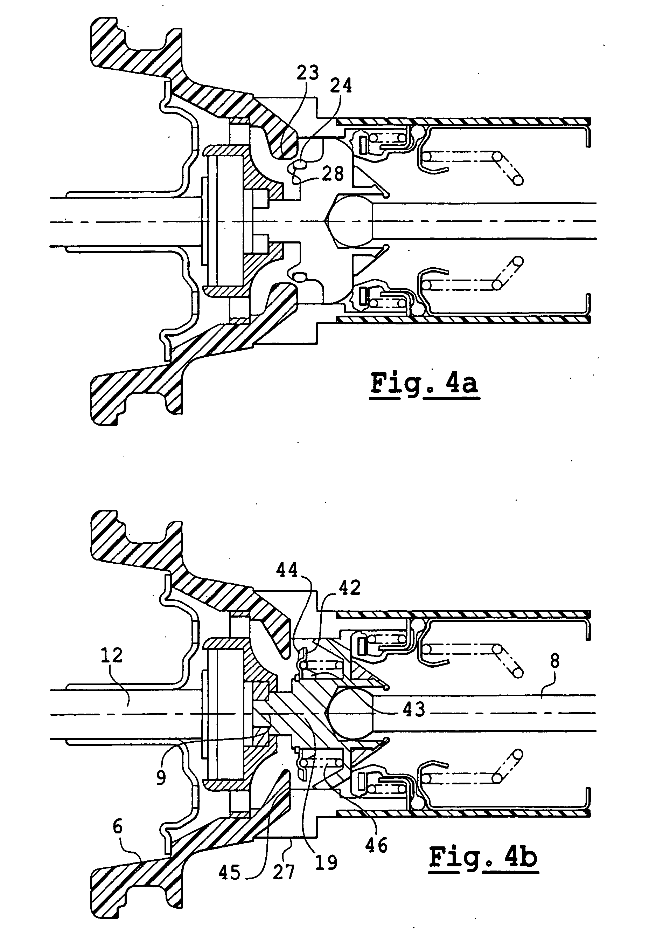

Les figures 4a et 4b montrent deux variantes de réalisation du premier clapet 15. Alors que sur la figure 4a le premier clapet 15 est formé par le joint torique 24 contenu dans la rainure 28, et qui s'engage dans l'alésage 23, la figure 4b montre que le premier clapet 15 peut être formé par un clapet du même type que le deuxième clapet 16. Par opposition sur la figure 4b, pour éviter les éventuels défauts d'usure résultant du coulissement du joint torique dans l'alésage 23, on prévoit un premier clapet 15 par mise en place à plat d'un joint souple circulaire sur un siège également circulaire. Dans ce cas, le premier clapet 15 comporte une coupelle 42 circulaire montée dans la base du plongeur 19. Cette coupelle circulaire 42 est percée dans son centre et est maintenue par la périphérie de ce percement par un joint étanche 43 contre la périphérie d'un fût cylindrique axial du plongeur 19. A une extrémité radiale externe la coupelle 42 porte un joint 44 circulaire, servant de joint souple du premier clapet 15. Ce joint 44 circulaire est destiné à venir en appui sur un replat 45 du piston pneumatique 6. Un ressort complémentaire 46 peut être utilisé, du fait du montage souple de la coupelle 42 sur le fût du plongeur 19, pour maintenir le joint 44 en position adéquate vis-à-vis du replat 45. Le ressort 46 a surtout pour objet d'autoriser une permanence de l'étanchéité, après le contact du joint 44 sur le replat 45, lorsque la tige de commande 8 continue à être enfoncée en direction de la tige de poussée 12.

Dans les deux cas, les figures 4a et 4b montrent en outre que le plongeur 19 peut être réalisé de manière monobloc avec le palpeur 9. Dans un exemple préféré, ces deux pièces 9 et 19, ou cette pièce unique sont en acier. Dans tous les cas, on notera que le premier clapet 15 est le plus proche de la chambre avant 2, et que le deuxième clapet 16 en est le plus éloigné. Dans tous ces cas, l'ouïe 27 est située en position intermédiaire entre ces deux clapets.

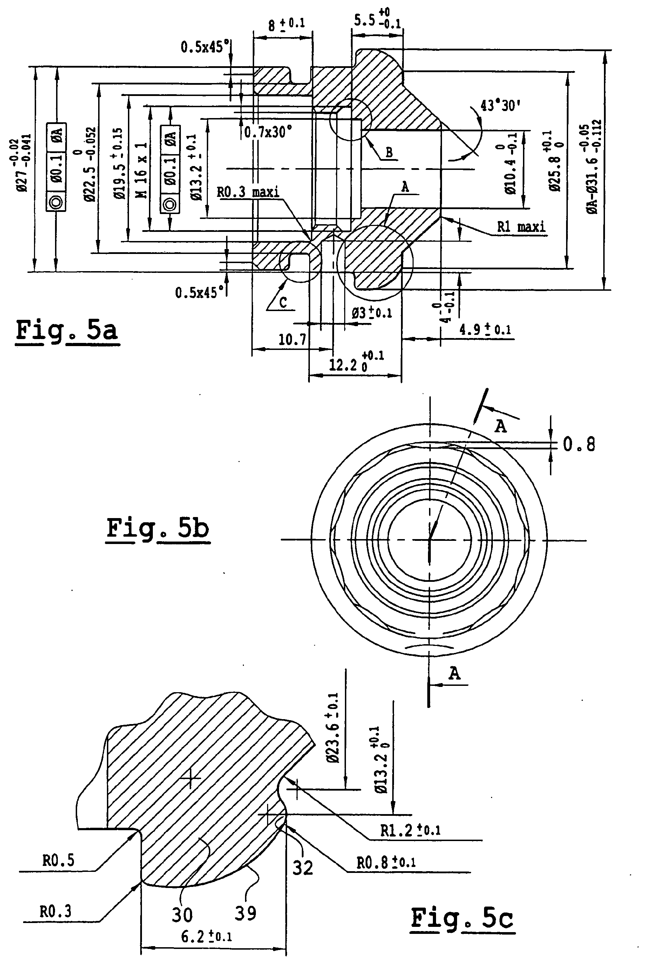

Les figures 5a et 5b montrent, dans le cadre de l'exemple préféré des figures 2 et 3, la forme particulière des cotes préférées de réalisation du distributeur 19. On notera sans les rappeler ici toutes les valeurs chiffrées en millimètres présentes sur cette figure. Par ailleurs, à proximité du siège 32, figure 5c, on notera les rayons de courbure de l'extrados 39 en forme de bec d'aigle 30. On notera également un rayon d'une courbure creuse située dans la partie radiale interne du siège 32, permettant une certaine excroissance du siège 32 pour que ce dernier s'imbrique avec une pression suffisante dans le plateau de joint 35. Cette courbure creuse est de nature à orienter les filets d'air au moment de leur admission, toujours dans le but d'éviter les turbulences. De ce fait, la partie interne du siège 32 forme ainsi une cavité propice à éviter cette turbulence.

La figure 5b montre, vu de dessus une particularité du siège 32. Celui-ci est réalisé d'une manière crénelée et possède ainsi dix trous ou créneaux répartis sur sa périphérie. Ces créneaux permettent une libération progressive de l'air à pression atmosphérique lorsque le freinage est léger.

## Revendications

1. Servomoteur pneumatique d'assistance de freinage comportant
- une tige de comma (8),
- une chambre avant (2) soumise à une dépression,
- une chambre arrière (3), et
- une vanne manoeuvrée par la tige de commander (8),
- la vanne comportant trois voies et servant à relier sélectivement la chambre arrière (3) à la chambre avant (2) ou à une arrivée haute pression,
- la vanne trois voies comportant un distributeur plongeur (19) monobloc emmené par la tige de commande (8) et formant deux clapets (15,16) situés dans deux plans perpendiculaires à un axe de la tige, ces deux plans étant distincts l'un de l'autre,
- un premier clape (15) de la vanne trois voies comportant un premier siège rigide de clapet et un premier joint souple de clapet, et reliant la chambre avant (2) à la chambre arrière (3),
- un deuxième clapet (16) de la vanne trois voies comportant un deuxième siège rigide de clapet et un deuxième joint souple de clapet, et reliant la chambre arrière (3) à l'arrivée haute pression,
- le distributeur plongeur (19) porte le premier joint souple du premier clapet (15) et le deuxième siège rigide du deuxième clapet (16) **caractérisé en ce que** le premier et le deuxième joints de clapet (15, 16) sont formés par deux éléments indépendants et **en ce qu'**ils comportent une butée d'arrêt (20) pour le deuxième clapet.

2. Servomoteur selon la revendication 1, **caractérisé en ce que**
- le siège du deuxième clapet (16) est situé à l'intérieur d'un extrados convexe du plongeur monobloc (19).

3. Servomoteur selon la revendication 2 **caractérisé en ce que**
- en position ouverte du deuxième clapet (16), l'extrados est situé face à un épanouissement d'un boîtier qui maintient la vanne trois voies.

4. Servomoteur selon l'une des revendications 1 à 3, **caractérisé en ce que**
- l'admission du fluide haute pression dans la chambre arrière (3) se réalise d'une section de siège à une section annulaire, la section annulaire étant de diamètre plus grand que la section de siège.

5. Servomoteur selon l'une des revendications 1 à 4, **caractérisé en ce que**
- le plongeur (19) comporte une face en redan dans laquelle est logée le premier joint souple du premier clapet (15).

6. Servomoteur selon l'une des revendications 1 à 5, **caractérisé en ce que**
- le premier joint (24) du premier clapet (15) est torique.

7. Servomoteur selon l'une des revendications 1 à 6, **caractérisé en ce qu'**il comporte
- un couple de chambre avant (2) et de chambre arrière (3), mécaniquement en cascade ou en parallèle.

8. Servomoteur selon l'une des revendications 1 à 7, **caractérisé en ce qu'**il comporte
- une chambre arrière (3) située en position intermédiaire entre une chambre avant (2) et le plongeur (19).

9. Servomoteur selon l'une des revendications 1 à 8, **caractérisé en ce qu'**il comporte
- une chambre avant (2) située en position intermédiaire entre une chambre arrière (3) et le plongeur (19).

10. Servomoteur selon l'une des revendications 1 à 9, **caractérisé en ce que**
- le deuxième siège du deuxième clapet (16) est crénelé.

11. Servomoteur selon l'une des revendications 1 à 10, **caractérisé en ce que**
- le premier clapet (15) de la vanne trois voies est situé le plus près de l'une des chambre (2, 3),
- le deuxième clapet (16) de la vanne trois voies est situé le plus loin de l'une des chambres (2, 3),
- un accès à la chambre arrière (3) est situé en position intermédiaire entre les deux clapets (15, 16).

## Claims

1. Pneumatic brake booster comprising
- a control rod (8),
- a front chamber (2) subject to a depression,
- a rear chamber (3), and
- a valve operated by the control rod (8),
- the valve comprising three ways and serving selectively to connect the rear chamber (3) to the front chamber (2) or to a high-pressure inlet,
- the three-way valve comprising a one-piece plunger distributor (19) carried by the control rod (8) and forming two valve elements (15, 16) lying in two planes perpendicular to an axis of the rod, these two planes being distinct from one another,
- a first valve element (15) of the three-way valve comprising a first rigid valve seat and a first flexible valve seal, and connecting the front chamber (2) to the rear chamber (3),
- a second valve element (16) of the three-way valve comprising a second rigid valve seat and a second flexible valve seal, and connecting the rear chamber (3) to the high-pressure inlet,
- the plunger distributor (19) carries the first flexible seal of the first valve element (15) and the second rigid seat of the second valve element (16) **characterized in that** the first and the second valve seals (15,16) are formed by two independent elements and **in that** they comprise a stop abutment for the second valve.

2. Booster according to Claim 1, **characterized in that**
- the seat of the second valve element (16) is situated on the inside of a convex outer surface of the one-piece plunger (19).

3. Booster according to Claim 2, **characterized in that**
- when the second valve element (16) is in the open position, the outer surface lies facing a thinning of a housing which holds the three-way valve.

4. Booster according to one of Claims 1 to 3, **characterized in that**
- the high-pressure fluid is let into the rear chamber (3) from a seat section to an annular section, the annular section being of larger diameter than the seat section.

5. Booster according to one of Claims 1 to 4, **characterized in that**
- the plunger (19) has a stepped face in which the first flexible seal of the first valve element (15) is housed.

6. Booster according to one of Claims 1 to 5, **characterized in that**
- the first seal (24) of the first valve element (15) is an O-ring.

7. Booster according to one of Claims 1 to 6, **characterized in that** it comprises
- a pair of front (2) and rear (3) chambers, mechanically in a cascade or in parallel.

8. Booster according to one of Claims 1 to 7, **characterized in that** it comprises
- a rear chamber (3) situated in an intermediate position between a front chamber (2) and the plunger (19).

9. Booster according to one of Claims 1 to 8, **characterized in that** it comprises
- a front chamber (2) situated in an intermediate position between a rear chamber (3) and the plunger (19).

10. Booster according to one of Claims 1 to 9, **characterized in that**
- the second seat of the second valve element (16) is undulating.

11. Booster according to one of Claims 1 to 10, **characterized in that**
- the first valve element (15) of the three-way valve is situated closest to one of the chambers (2, 3)
- the second valve element (16) of the three-way valve is situated furthest from one of the chambers (2, 3)
- access to the rear chamber (3) is situated at an intermediate position between the two valve elements (15, 16).

## Patentansprüche

1. Pneumatischer Servomotor zur Bremsunterstützung, mit
- einer Steuerstange (8),
- einer vorderen Kammer (2), die einem Unterdruck ausgesetzt ist,
- einer hinteren Kammer (3), und
- einem Ventil, das von der Steuerstange (8) betätigt wird,
- wobei das Ventil drei Wege aufweist und dazu dient, die hintere Kammer (3) selektiv mit der vorderen Kammer (2) oder mit einem Hochdruckeinlass zu verbinden,
- wobei das Dreiwegeventil einen einstückig ausgebildeten und von der Steuerstange (8) mitgenommenen Tauchkolbenverteiler (19) aufweist, der zwei Ventilelemente (15, 16) bildet, die sich in zwei zur Achse der Stange senkrechten Ebenen befinden, wobei diese beiden Ebenen unterschiedlich sind,
- wobei ein erstes Ventilelement (15) des Dreiwegeventils einen ersten starren Ventilelementsitz und eine erste nachgiebige Ventilelementdichtung aufweist und die vordere Kammer (2) mit der hinteren Kammer (3) verbindet,
- wobei ein zweites Ventilelement (16) des Dreiwegeventils einen zweiten starren Ventilelementsitz und eine zweite nachgiebige Ventilelementdichtung aufweist und die hintere Kammer (3) mit dem Hochdruckeinlass verbindet,
- wobei der Tauchkolbenverteiler (19) die erste nachgiebige Dichtung des ersten Ventilelements (15) und den zweiten starren Sitz des zweiten Ventilelements (16) trägt, **dadurch gekennzeichnet, dass** die erste und die zweite Dichtung der Ventilelemente (15, 16) durch zwei unabhängige Elemente gebildet sind und einen Anschlag (20) für das zweite Ventilelement aufweisen.

2. Servomotor nach Anspruch 1, **dadurch gekennzeichnet, dass**
- der Sitz des zweiten Ventilelements (16) innerhalb einer konvexen Bogenaußenfläche des einstückig ausgebildeten Tauchkolbens (19) angeordnet ist.

3. Servomotor nach Anspruch 2, **dadurch gekennzeichnet, dass**
- sich in der geöffneten Stellung des zweiten Ventilelements (16) die Bogenaußenfläche gegenüber einer Aufweitung eines Gehäuses befindet, welches das Dreiwegeventil hält.

4. Servomotor nach einem der Ansprüche 1 bis 3, **dadurch gekennzeichnet, dass**
- das Zuführen des Hochdruckfluids in die hintere Kammer (3) von einem Sitzquerschnitt zu einem ringförmigen Querschnitt erfolgt, wobei der ringförmige Querschnitt einen größeren Durchmesser besitzt als der Sitzquerschnitt.

5. Servomotor nach einem der Ansprüche 1 bis 4, **dadurch gekennzeichnet, dass**
- der Tauchkolben (19) eine gestufte Fläche aufweist, in der die erste nachgiebige Dichtung des ersten Ventilelements (15) aufgenommen ist.

6. Servomotor nach einem der Ansprüche 1 bis 5, **dadurch gekennzeichnet, dass**
- die erste Dichtung (24) des ersten Ventilelements (15) torisch ist.

7. Servomotor nach einem der Ansprüche 1 bis 6, **dadurch gekennzeichnet, dass** er
- zwei Kammern, eine vordere Kammer (2) und eine hintere Kammer (3), aufweist, die mechanisch hintereinander oder parallel geschaltet sind.

8. Servomotor nach einem der Ansprüche 1 bis 7, **dadurch gekennzeichnet, dass** er
- eine hintere Kammer (3) aufweist, die sich in einer Zwischenstellung zwischen einer vorderen Kammer (2) und dem Tauchkolben (19) befindet.

9. Servomotor nach einem der Ansprüche 1 bis 8, **dadurch gekennzeichnet, dass** er
- eine vordere Kammer (2) aufweist, die sich in einer Zwischenstellung zwischen einer hinteren Kammer (3) und dem Tauchkolben (19) befindet.

10. Servomotor nach einem der Ansprüche 1 bis 9, **dadurch gekennzeichnet, dass**
- der zweite Sitz des zweiten Ventilelements (16) gezahnt ist.

11. Servomotor nach einem der Ansprüche 1 bis 10, **dadurch gekennzeichnet, dass**
- das erste Ventilelement (15) des Dreiwegeventils dasjenige ist, das zu einer der Kammern (2, 3) am nächsten angeordnet ist,
- das zweite Ventilelement (16) des Dreiwegeventils dasjenige ist, das von einer der Kammern (2, 3) am entferntesten angeordnet ist,
- sich ein Zugang zur hinteren Kammer (3) in einer Zwischenstellung zwischen den beiden Ventilelementen (15, 16) befindet.
